# EUROPEAN PATENT SPECIFICATION

(11) **EP 3 537 262 B1**
(45) Date of publication and mention of the grant of the patent: **16.08.2023**
(21) Application number: 19156441.8
(22) Date of filing: 11.02.2019
(51) Int. Cl.: G06F 3/01

(54) **CHARACTER INPUT DEVICE, CHARACTER INPUT METHOD, AND CHARACTER INPUT PROGRAM**
ZEICHENEINGABEVORRICHTUNG, ZEICHENEINGABEVERFAHREN UND ZEICHENEINGABEPROGRAMM
DISPOSITIF DE SAISIE DE CARACTÈRES, PROCÉDÉ DE SAISIE DE CARACTÈRES ET PROGRAMME DE SAISIE DE CARACTÈRES

(30) Priority: 05.03.2018 JP 2018038658
(43) Date of publication of application: 11.09.2019
(73) Proprietor: Omron Corporation, Kyoto-shi, Kyoto 600-8530 (JP)
(72) Inventor: Nonomura, Yui, Kyoto-shi, Kyoto 604-8152 (JP)
(74) Representative: Kilian Kilian & Partner

(56) References cited:
- US-A1- 2014 055 371
- US-A1- 2014 333 549

## Description

### CROSS-REFERENCE TO RELATED APPLICATION

This application claims priority to Japanese Patent Application No. 2018-038658 filed on March 5, 2018, the contents of which are incorporated herein by reference.

### FIELD

The present invention relates to a technique for inputting characters on a touchscreen input device.

### BACKGROUND

Patent Literature 1 describes a technique for detecting an input error made by a user in an input operation including a sliding operation and correcting the input error.
Further prior art is known from Patent Literature 2 and Patent Literature 3.

### CITATION LIST

### PATENT LITERATURE

Patent Literature 1: WO 2012/161223, Patent Literature 2: US 2014/333549 A1, Patent Literature 3: US 2014/055371 A1

### SUMMARY

### TECHNICAL PROBLEM

However, the structure described in Patent Literature 1 and 2 does not determine which digit (thumb or finger) is used for a sliding operation, and thus can further cause an input error in an input operation performed with a different digit.

One or more aspects of the present invention are directed to a technique for reducing errors in input operations performed with different digits.

### SOLUTION TO PROBLEM

The invention is defined by the independent claims. Preferred embodiments are subject-matters of the dependent claims.

A character input device according to one aspect of present invention includes an operation unit that receives a character input performed with a flick input, a digit detector that determines a type of digit used for the flick input, and a controller that adjusts an input determination area for the character input in accordance with an input error count for the flick input.

This structure adjusts the input determination area for each type of digit used in every flick input to reduce input errors, and thus improves user convenience.

The character input device further includes a storage that stores the type of digit in a manner associated with the input error count for the flick input.

This structure stores the input determination area for each type of digit for subsequent operations.

The controller included in the character input device sets a threshold on the input error count for the flick input, and adjusts the input determination area when the count exceeds the threshold.

This structure efficiently adjusts the input determination area.

The type of digit used in the character input device includes a thumb and a digit other than the thumb.

This structure distinguishes a thumb that moves differently in an input operation from other digits to adjust the input determination area as appropriate for each situation.

### ADVANTAGEOUS EFFECTS

The technique according to the above aspects reduces input errors in a sliding operation.

### BRIEF DESCRIPTION OF THE DRAWINGS

Fig. 1 is a block diagram of a character input device according to a first embodiment of the present invention.
Figs. 2A and 2B are schematic diagrams of the character input device according to the first embodiment of the present invention.
Figs. 3A and 3B are schematic diagrams of adjusting input determination areas for the character input device according to the first embodiment of the present invention.
Fig. 4 is a flowchart showing the operation of the character input device according to the first embodiment of the present invention.
Fig. 5 is a flowchart showing the operation of a character input device according to a second embodiment of the present invention.

### DETAILED DESCRIPTION

Embodiments of the present invention will now be described with reference to the drawings.

### Example Use

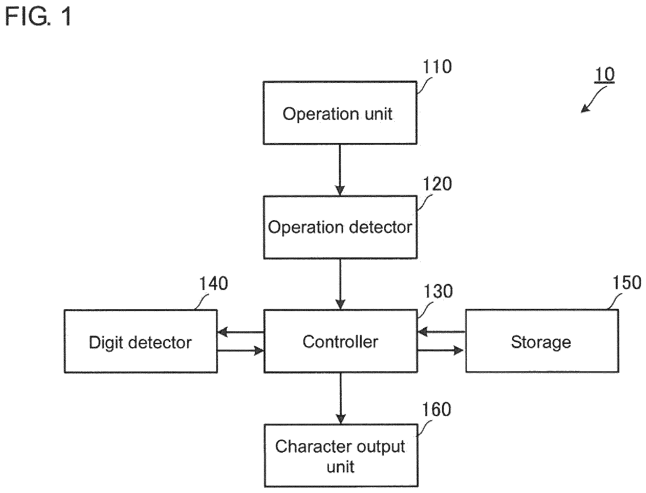

An example of the present invention will be described first with reference to Fig. 1. Fig. 1 is a block diagram of a character input device according to a first embodiment of the present invention. A character input device 10 is installed in, for example, a mobile communication terminal such as a smartphone, and allows a user to input characters by performing an operation on a touchscreen display.

The character input device 10 includes an operation unit 110, an operation detector 120, a controller 130, a digit detector 140, a storage 150, and a character output unit 160. Character inputs (described below) include flick inputs with digits. A flick input refers to inputting characters by sliding on a touchscreen display. A flick input described in the example below inputs Japanese characters, but the same technique is applicable to inputting alphabetical characters.

An input with a thumb will be described first.

The operation unit 110 is, for example, a software keyboard on a touchscreen display that displays keys and receives character inputs. The operation unit 110 includes multiple input determination areas.

The operation detector 120 detects a character input on the operation unit 110, and outputs a path of the character input (hereafter, a first input path) and a first character input (hereafter, a first input character) to the controller 130.

The controller 130 outputs the first input path to the digit detector 140. Based on the first input path, the digit detector 140 detects an input with a thumb through predetermined determination using, for example, the path length of the character input or the size of the area over which the digit touches during the character input.

The controller 130 outputs the first input character to the character output unit 160. The user views and recognizes the first input character on the character output unit 160.

When determining that the first input character has an input error, the user presses a delete button to delete the first input character.

The user then inputs a correct character (hereafter, a second input character). The operation unit 110 receives the character input of the second input character.

The operation detector 120 detects the character input on the operation unit 110, and outputs a path of the character input (hereafter, a second input path) and the second input character to the controller 130.

The controller 130 compares the first input character with the second input character. The controller 130 determines that the user has made an input error when the second input character differs from the first input character. The controller 130 associates the first input path with the second character input, and stores the information into the storage 150.

The controller 130 repeats the above operations to count the number of input errors. The input error count for the user with a thumb is stored into the storage 150.

The controller 130 thus determines the tendency of input errors with a thumb. For example, the controller 130 calculates the mean value of the first input paths, and corrects the input determination areas for the second input character. The input determination areas are used to determine the character to be selectively input by the controller 130 in response to up/down or right/left sliding in a flick input.

This structure corrects the input determination areas for an input with a thumb, and improves user convenience.

An input with a digit other than a thumb, or for example with a forefinger, will now be described.

The operation detector 120 detects a character input on the operation unit 110, and outputs a path of the character input (hereafter, a third input path) and a first character input (hereafter, a third input character) to the controller 130.

The controller 130 outputs the third input path to the digit detector 140. Based on the path, the digit detector 140 detects an input with a digit other than a thumb through predetermined determination.

The controller 130 outputs the third input character to the character output unit 160. The user views and recognizes the third input character on the character output unit 160.

When determining that the third input character has an input error, the user deletes the third input character.

The user then inputs a correct character (hereafter, a fourth input character). The operation unit 110 receives the character input of the fourth input character.

The operation detector 120 detects the character input on the operation unit 110, and outputs a path of the character input (hereafter, a fourth input path) and the fourth input character to the controller 130.

In the same manner as for the input with a thumb, the controller 130 compares the third input character with the fourth input character. The controller 130 determines that the user has made an input error when the fourth input character differs from the third input character. The controller 130 associates the third input path with the fourth character input, and stores the information into the storage 150.

The controller 130 repeats the above operations to count the input error count. The input error count for the user with a forefinger (a digit other than a thumb) is stored into the storage 150.

The controller 130 thus determines the tendency of input errors with a forefinger (a digit other than a thumb). As described above, the controller 130 calculates the mean value of the third input paths, and corrects the input determination areas for the fourth input character.

This structure corrects the input determination areas for an input with a forefinger (a digit other than a thumb), and improves user convenience.

This structure thus determines whether an input is performed with a thumb or a digit other than a thumb, and corrects the input determination areas accordingly.

### Example Structure 1

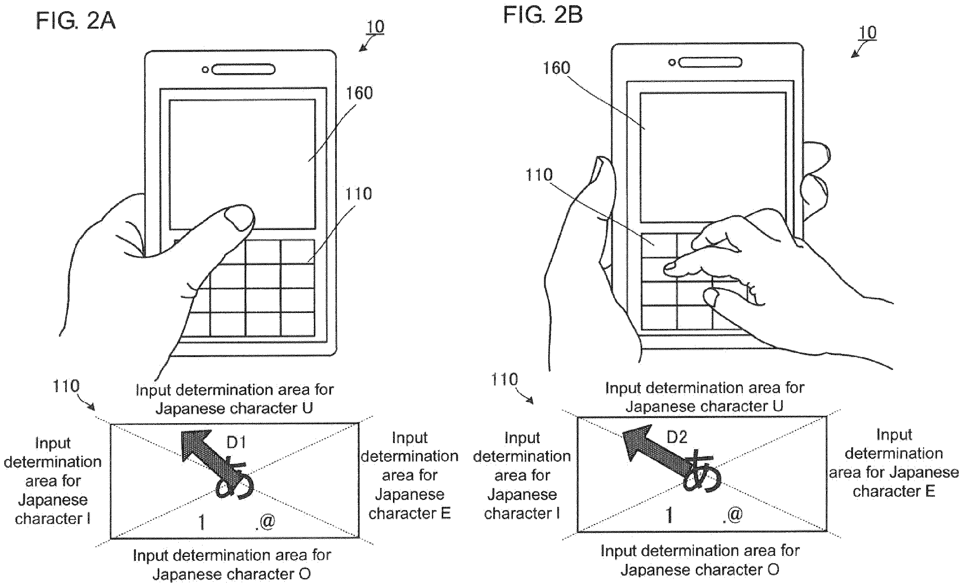

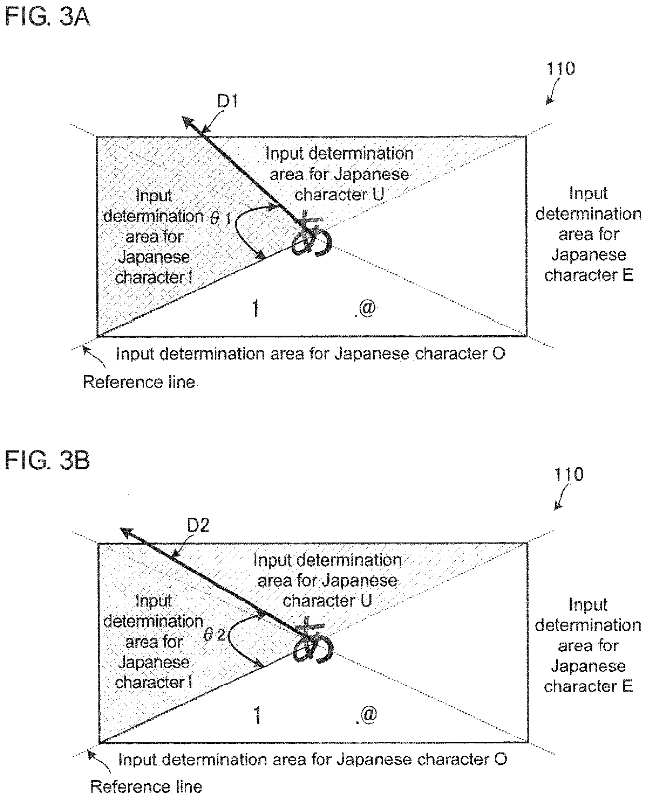

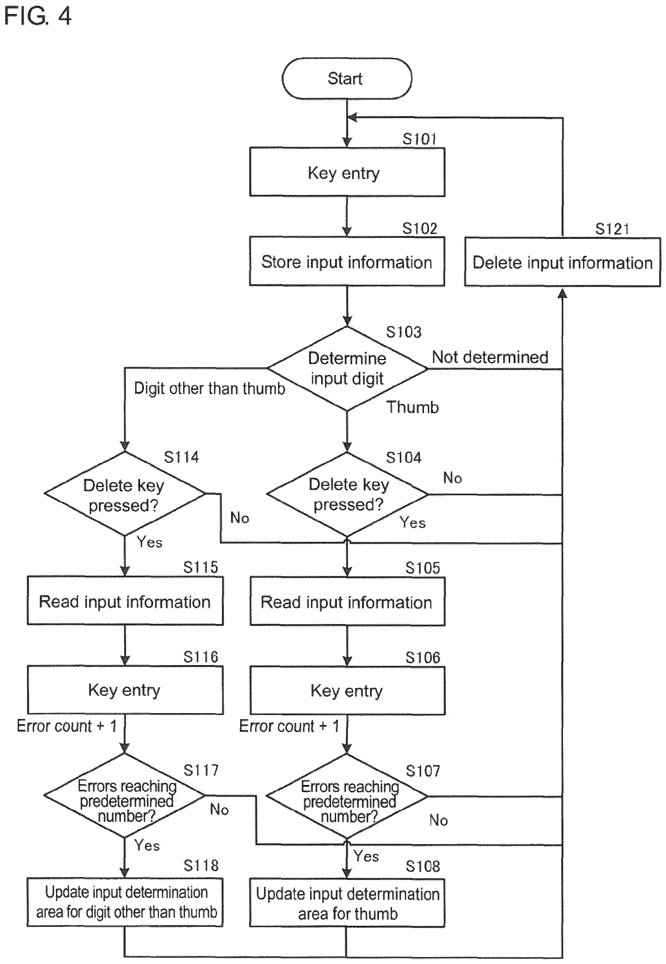

Fig. 1 is a block diagram of a character input device according to the first embodiment of the present invention. Figs. 2A and 2B are schematic diagrams of the character input device according to the first embodiment of the present invention. Figs. 3A and 3B are schematic diagrams describing the adjustment of the input determination areas for the character input device according to the first embodiment of the present invention. Fig. 4 is a flowchart showing the operation of the character input device according to the first embodiment of the present invention.

An example structure will be described in more detail with reference to Figs. 2A and 2B based on the structure of the character input device 10 shown in Fig. 1.

As shown in Figs. 1, 2A, and 2B, the character input device 10 includes the operation unit 110 and the character output unit 160.

Fig. 2A is a schematic diagram of the character input device 10 operated with one hand, including an enlarged view of the operation unit 110. Similarly, Fig. 2B is a schematic diagram of the character input device 10 operated with both hands, including an enlarged view of the operation unit 110.

As shown in Fig. 2A, a user inputs a Japanese character I as a first input character with a thumb. The digit detector 140 detects the input with the thumb.

A first input path of the thumb extends along a path D1. The path D1 is included in an input determination area defined for the Japanese character U. In this case, the Japanese character U is output to the character output unit 160.

The user thus determines the Japanese character U as an input error, and presses a delete button. The user then inputs a Japanese character I, which is a second input character, along a second input path.

The controller 130 determines that the user intends to input the Japanese character I, which is the second input character, with the first input path. The controller 130 associates the first input path with the Japanese character I, which is the second input character, and stores the information into the storage 150.

As shown in Fig. 2B, the user then inputs the Japanese character I, which is a third input character, with a forefinger (a digit other than a thumb). The digit detector 140 detects the input with a forefinger.

As in the example shown in Fig. 2A, the third input path of the forefinger extends along the path D2. The path D2 is included in the input determination area defined for the Japanese character U. In this case, the Japanese character U is output to the character output unit 160.

The user thus determines the Japanese character U as an input error, and presses the delete button. The user then inputs a Japanese character I, which is a fourth input character, along a fourth input path.

The controller 130 determines that the user intends to input the Japanese character I, which is the fourth input character, with the third input path. The controller 130 associates the third input path with the Japanese character I, which is the fourth input character, and stores the information into the storage 150.

The controller 130 repeats the above operations to adjust the input determination areas for the second input character and the fourth input character. This structure thus improves user convenience.

A method for adjusting the input determination areas will be described in more detail with reference to Figs. 3A and 3B.

Fig. 3A is an enlarged view of the input determination areas in the example of Fig. 2A. Fig. 3B is an enlarged view of the input determination areas in the example of Fig. 2B. Figs. 3A and 3B show the results obtained after multiple input errors.

For the input with a thumb, as shown in Fig. 3A, the input determination area for the Japanese character I is defined with a reference line and the path D1, which is the first input path. The reference line passing through the center of the operation unit 110 and the path D1 form the angle θ1 between them.

This first input path may be the mean of the first input paths of multiple input errors of the user, or may be the mean of the first input paths of input errors of the user made before the input error count reaches a threshold.

For the input with a digit other than a thumb, as shown in Fig. 3B, the input determination area for the Japanese character I is defined with the reference line and the path D2, which is the third input path. The reference line passing through the operation unit 110 and the path D2 form the angle θ2 between them.

In the same manner as the first input path, the third input path may be the mean of the third input paths of multiple input errors of the user, or may be the mean of the third input paths of input errors of the user made before the input error count reaches a threshold.

As shown in Figs. 3A and 3B, the angle θ1 is greater than the angle θ2. More specifically, the input with a thumb in Fig. 3A is more likely to cause an input error. However, the controller 130 can determine the input error tendency and the habitual input tendency of the user, and adjust the input determination areas for the thumb or for a digit other than the thumb.

An operation for adjusting the input determination areas will be described in detail with reference to Fig. 4. Fig. 4 is a flowchart showing the operation of the character input device according to the first embodiment of the present invention.

The user performs key entry (flick input) by operating the operation unit 110. The operation detector 120 detects the key entry information and outputs the information to the controller 130 (S101).

The controller 130 stores the key entry information into the storage 150 (S102).

The digit detector 140 determines the digit used for the key entry (S103). When the digit detector 140 determines that the digit used for the key entry is a thumb, the operation detector 120 determines whether the delete key is pressed subsequently (S104).

When the operation detector 120 determines that the delete key has been pressed (Yes in S104), the input information (first input character) is read from the storage 150 (S105). When the operation detector 120 determines that the delete key has not been pressed (No in S104), the input information is deleted (S121).

The user performs the key entry again with the operation unit 110 (S106). The controller 130 compares the first input character with the second input character. When the first input character differs from the second input character, the input error count is incremented by one.

The controller 130 determines whether the input error count reaches a predetermined number (threshold) (S107). When the input error count has reached the predetermined number (Yes in S107), the controller 130 changes and updates the input determination areas for the thumb (S108). When the input error count has not reached the predetermined number (No in S107), the controller 130 deletes the input information (S121).

When the digit detector 140 determines that the digit used for the key entry is a digit other than a thumb, the operation detector 120 determines whether the delete key is pressed (S114).

When the operation detector 120 determines that the delete key has been pressed (Yes in S114), the input information (third input character) is read from the storage 150 (S115). When the operation detector 120 determines that the delete key has not been pressed (No in S114), the input information is deleted (S121).

The user performs the key entry again with the operation unit 110 (S116). The controller 130 compares the third input character with the fourth input character. When the third input character differs from the fourth input character, the input error count is incremented by one.

The controller 130 determines whether the input error count reaches a predetermined number (threshold) (S117). When the input error count has reached the predetermined number (Yes in S117), the controller 130 changes and updates the input determination areas for the thumb (S118). When the input error count has not reached the predetermined number (No in S117), the controller 130 deletes the input information (S121).

When the digit for the input is not determined (S103), the input information is deleted (S121).

With the above procedure, the digit used for the flick input is determined to be either a thumb or a digit other than a thumb, and the input determination areas for each digit can be updated. Input errors with a thumb or with a digit other than a thumb can also be detected, and the input determination areas can be updated accordingly. This structure also determines the input tendency of the user, and improves user convenience.

Input errors can be detected based on a predetermined count (threshold), which can be determined in advance. This allows more flexible setting.

Each input determination area may be sized to prevent another input determination area for a different character on the software keyboard from becoming too small.

### Example Structure 2

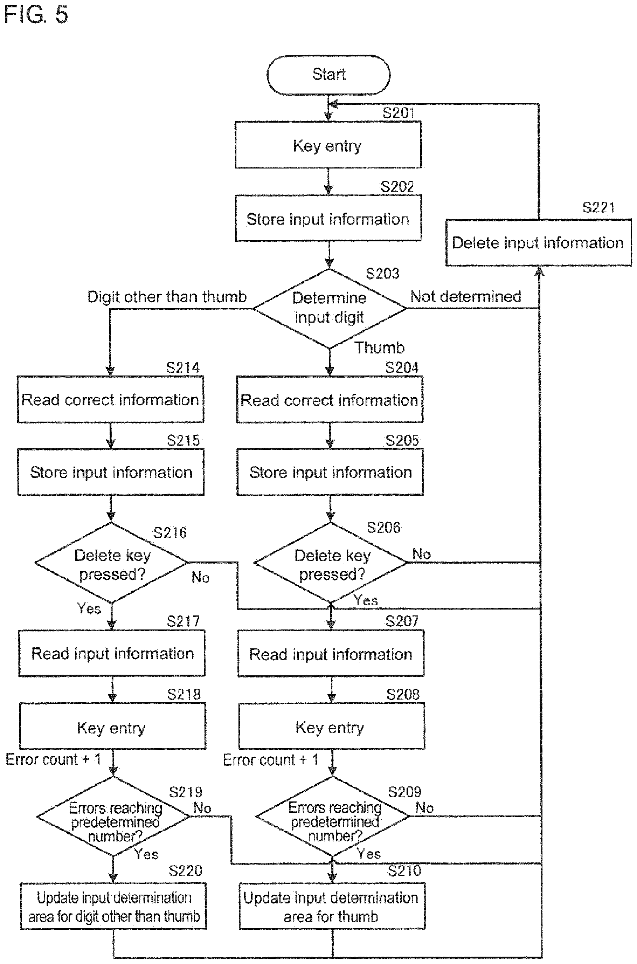

An operation for adjusting the input determination areas will now be described in detail with reference to Fig. 5. Fig. 5 is a flowchart showing the operation of a character input device according to a second embodiment of the present invention.

The second embodiment differs from the first embodiment in the procedure for adjusting the input determination areas. The other components and processes are the same as those in the first embodiment, and will not be described.

A user performs an input on the operation unit 110. The operation detector 120 detects the input information, and outputs the information to the controller 130 (S201).

The controller 130 stores the input information into the storage 150 (S202).

The digit detector 140 determines the digit used for key entry (S203). When the digit detector 140 determines that the digit used for the key entry is a thumb, correct information prestored for a thumb is read from the storage 150 (S204). The correct information is to be used for updating the input determination areas.

The controller 130 stores the input information into the storage 150 (S205).

The operation detector 120 determines whether the delete key is pressed (S206).

When the operation detector 120 determines that the delete key has been pressed (Yes in S206), the input information (the first input character) is read from the storage 150 (S207). When the operation detector 120 determines that the delete key has not been pressed (No in S206), the input information is deleted (S221).

The user performs the key entry again with the operation unit 110 (S208). The controller 130 compares the first input character with the second input character. When the first input character differs from the second input character, the input error count is incremented by one.

The controller 130 determines whether the input error count reaches a predetermined number (threshold) (S209). When the input error count has reached the predetermined number (Yes in S209), the controller 130 changes and updates the input determination areas for the thumb with a mean value calculated using the correct information (S210). The correct information is then updated accordingly. When the input error count has not reached the predetermined number (No in S209), the controller 130 deletes the input information (S221).

When the digit detector 140 determines that the digit used for the key entry is a digit other than a thumb, correct information prestored for a digit other than a thumb is read from the storage 150 (S214).

The controller 130 stores the input information into the storage 150 (S215).

The operation detector 120 determines whether the delete key is pressed (S216).

When the operation detector 120 determines that the delete key has been pressed (Yes in S216), the input information (the third input character) is read from the storage 150 (S217). When the operation detector 120 determines that the delete key has not been pressed (No in S216), the input information is deleted (S221).

The user performs key entry again with the operation unit 110 (S218). The controller 130 compares the third input character with the fourth input character. When the third input character differs from the fourth input character, the input error count is incremented by one.

The controller 130 determines whether the input error count reaches a predetermined number (threshold) (S219). When the input error count has reached the predetermined number (Yes in S219), the controller 130 changes and updates the input determination areas for the thumb with the mean value calculated using the correct information (S220). The correct information is then updated accordingly. When the input error count has not reached the predetermined number (No in S219), the controller 130 deletes the input information (S221).

When the digit for the input is not determined (S103), the input information is deleted (S121).

With the above procedure as well, the digit used for the flick input is determined to be either a thumb or a digit other than a thumb, and the input determination areas for each digit can be updated accordingly.

The prestored correct information allows such input determination in accordance with the types of digit even after the device is reactivated and the key entry is restarted.

Input errors with a thumb or a digit other than a thumb can also be detected, and the input determination areas can be updated accordingly. This structure also determines the input tendency of the user, and improves usability for the user.

Input errors can be detected based on a predetermined count (threshold) determined in advance. This allows more flexible setting.

The structures described above may retain predictive suggestions or the input mode for each type of digit. Such predictive suggestions or key entry settings may then be switched depending on whether the digit used for key entry is a thumb or a digit other than a thumb.

### REFERENCE SIGNS LIST

D1, D2 path
10 character input device
110 operation unit
120 operation detector
130 controller
140 digit detector
150 storage
160 character output unit

## Claims

1. A character input device (10), comprising:
an operation unit (110) configured to receive a character input performed with a flick input;
a digit detector (140) configured to determine a type of digit of a plurality of types of digits used for the flick input;
a controller (130) configured to adjust an input determination area for the character input in accordance with an input error count for the flick input, wherein input determination areas are provided for the character input, each of the input determination areas being provided for a respective different one of the types of digits, wherein
the controller (130) is configured to count a corresponding input error count for each type of digit and to increase the corresponding error count when the controller (130) determines that a subsequent character input, which is received after a delete button to delete the character input was pressed, differs from the character input, and to adjust the corresponding input determination area provided for the determined type of digit for the character input, when the error count reaches a set threshold; and
a storage (150) configured to store, for each type of digit, the type of digit in a manner associated with the corresponding input error count for the flick input.

2. The character input device (10) according to claim 1 , wherein
the types of digits include a thumb and a digit other than the thumb.

3. A character input method implemented by a computer, the method comprising:
receiving a character input performed with a flick input;
determining a type of digit of a plurality of types of digits used for the flick input; and
adjusting an input determination area for the character input in accordance with an input error count for the flick input, wherein input determination areas are provided for the character input, each of the input determination areas being provided for a respective different one of the types of digits, wherein
a corresponding input error count is counted for each type of digit and the corresponding error count is increased when it is determined that a subsequent character input, which is received after a delete button to delete the character input was pressed, differs from the character input, and the corresponding input determination area provided for the determined type of digit for the character input is adjusted when the error count reaches a predetermined number; and
storing, for each type of digit, the type of digit in a manner associated with the corresponding input error count for the flick input.

4. A character input program executable by a computer comprising a character input device, wherein the character input device comprises an operation unit configured to receive a character input performed with a flick input and a digit detector configured to determine a type of digit of a plurality of types of digits used for the flick input, wherein the program is configured to, when executed by the computer, execute the method according to claim 3.

## Patentansprüche

1. Zeicheneingabevorrichtung (10), umfassend:
eine Bedieneinheit (110), die dazu eingerichtet ist, eine Zeicheneingabe zu empfangen, die mit einem Flick-Input ausgeführt wird;
einen Zifferndetektor (140), der dazu eingerichtet ist, einen Zifferntyp aus einer Vielzahl von Zifferntypen zu bestimmen, die für den Flick-Input verwendet werden;
eine Steuerung (130), die dazu eingerichtet ist, einen Eingabe-Bestimmungsbereich für die Zeicheneingabe in Übereinstimmung mit einer Eingabefehlerzählung für die Flick-Eingabe einzustellen, wobei Eingabe-Bestimmungsbereiche für die Zeicheneingabe vorgesehen sind, wobei jeder der Eingabe-Bestimmungsbereiche für einen jeweils anderen der Zifferntypen vorgesehen ist, wobei
die Steuerung (130) dazu eingerichtet ist, eine entsprechende Eingabefehlerzählung für jeden Zifferntyp zu zählen und die entsprechende Fehlerzählung zu erhöhen, wenn die Steuerung (130) feststellt, dass eine nachfolgende Zeicheneingabe, die empfangen wird, nachdem eine Löschtaste zum Löschen der Zeicheneingabe gedrückt wurde, sich von der Zeicheneingabe unterscheidet, und den entsprechenden Eingabe-Bestimmungsbereich einzustellen, der für den bestimmten Zifferntyp für die Zeicheneingabe vorgesehen ist, wenn die Fehlerzählung einen festgelegten Schwellenwert erreicht; und
einen Speicher (150), der dazu eingerichtet ist, für jeden Zifferntyp den Zifferntyp in einer Weise zu speichern, die mit der entsprechenden Eingabefehlerzählung für den Flick-Input verbunden ist.

2. Zeicheneingabevorrichtung (10) nach Anspruch 1, wobei
die Zifferntypen einen Daumen und eine andere Ziffer als den Daumen umfassen.

3. Zeicheneingabeverfahren, das von einem Rechner implementiert wird, das Verfahren umfassend:
Empfangen einer Zeicheneingabe, die mit einem Flick-Input ausgeführt wird;
Bestimmen eines Zifferntyps aus einer Vielzahl von Zifferntypen, die für den Flick-Input verwendet werden; und
Einstellen eines Eingabe-Bestimmungsbereichs für die Zeicheneingabe in Übereinstimmung mit einer Eingabefehlerzählung für die Flick-Eingabe, wobei Eingabe-Bestimmungsbereiche für die Zeicheneingabe vorgesehen sind, wobei jeder der Eingabe-Bestimmungsbereiche für einen jeweils anderen der Zifferntypen vorgesehen ist, wobei
eine entsprechende Eingabefehlerzählung für jeden Zifferntyp gezählt und die entsprechende Fehlerzählung erhöht wird, wenn bestimmt wird, dass eine nachfolgende Zeicheneingabe, die empfangen wird, nachdem eine Löschtaste zum Löschen der Zeicheneingabe gedrückt wurde, sich von der Zeicheneingabe unterscheidet, und der entsprechende Eingabe-Bestimmungsbereich, der für den bestimmten Zifferntyp für die Zeicheneingabe vorgesehen ist, eingestellt wird, wenn die Fehlerzählung eine vorbestimmte Zahl erreicht; und
Speichern des Zifferntyps für jeden Zifferntyp in einer Weise, die mit der entsprechenden Eingabefehlerzählung für den Flick-Input verbunden ist.

4. Zeicheneingabeprogramm, das von einem Computer ausführbar ist, der eine Zeicheneingabevorrichtung umfasst, wobei die Zeicheneingabevorrichtung eine Bedieneinheit umfasst, die dazu eingerichtet ist, eine Zeicheneingabe zu empfangen, die mit einer Flick-Eingabe ausgeführt wird, und einen Zifferndetektor, der dazu eingerichtet ist, einen Zifferntyp aus einer Vielzahl von Zifferntypen zu bestimmen, die für die Flick-Eingabe verwendet werden, wobei das Programm dazu eingerichtet ist, wenn es von dem Computer ausgeführt wird, das Verfahren nach Anspruch 3 auszuführen.

## Revendications

1. Dispositif de saisie de caractères (10), comprenant :
une unité d'exploitation (110) configurée pour recevoir une saisie de caractères réalisée avec une saisie par effleurement ;
un détecteur de doigt (140) configuré pour déterminer un type de doigt parmi une pluralité de types de doigts utilisé pour la saisie par effleurement ;
un dispositif de commande (130) configuré pour ajuster une zone de détermination de saisie pour la saisie de caractères en fonction d'un compte d'erreurs de saisie pour la saisie par effleurement, dans lequel des zones de détermination de saisie sont prévues pour la saisie de caractères, chacune des zones de détermination de saisie étant prévue pour un type différent respectif parmi les types de doigts, dans lequel
le dispositif de commande (130) est configuré pour compter un compte d'erreurs de saisie correspondant pour chaque type de doigt et pour augmenter le compte d'erreurs correspondant lorsque le dispositif de commande (130) détermine qu'une saisie de caractères suivante, qui est reçue après qu'un bouton de suppression pour supprimer la saisie de caractères a été pressé, diffère de la saisie de caractères, et pour ajuster la zone de détermination de saisie correspondante prévue pour le type de doigt déterminé pour la saisie de caractère, lorsque le compte d'erreurs atteint un seuil de consigne ; et
un stockage (150) configuré pour stocker, pour chaque type de doigt, le type de doigt d'une manière associée au compte d'erreurs de saisie correspondant pour la saisie par effleurement.

2. Dispositif de saisie de caractères (10) selon la revendication 1, dans lequel
les types de doigts comportent un pouce et un doigt autre que le pouce.

3. Méthode de saisie de caractères mis en œuvre par un ordinateur, la méthode comprenant :
la réception d'une saisie de caractères réalisée avec une saisie par effleurement ;
la détermination d'un type de doigt parmi une pluralité de types de doigts utilisé pour la saisie par effleurement ; et
l'ajustement d'une zone de détermination de saisie pour la saisie de caractères en fonction d'un compte d'erreurs de saisie pour la saisie par effleurement, dans laquelle des zones de détermination de saisie sont prévues pour la saisie de caractères, chacune des zones de détermination de saisie étant prévue pour un type différent respectif parmi les types de doigts, dans laquelle
un compte d'erreurs de saisie correspondant est compté pour chaque type de doigt et le compte d'erreurs correspondant est augmenté lorsqu'il est déterminé qu'une saisie de caractères suivante, qui est reçue après qu'un bouton de suppression pour supprimer la saisie de caractères a été pressé, diffère de la saisie de caractères, et la zone de détermination de saisie correspondante prévue pour le type de doigt déterminé pour la saisie de caractère est ajusté lorsque le compte d'erreurs atteint un nombre prédéterminé ; et
le stockage, pour chaque type de doigt, du type de doigt d'une manière associée au compte d'erreurs de saisie correspondant pour la saisie par effleurement.

4. Programme de saisie de caractères exécutable par un ordinateur comprenant un dispositif de saisie de caractères, dans lequel le dispositif de saisie de caractères comprend une unité d'exploitation configurée pour recevoir une saisie de caractères réalisée avec une saisie par effleurement et un détecteur de doigt configuré pour déterminer un type de doigt parmi une pluralité de types de doigts utilisé pour la saisie par effleurement, dans lequel le programme est configuré pour, lorsqu'il est exécuté par l'ordinateur, exécuter la méthode selon la revendication 3.
